# EUROPEAN PATENT APPLICATION

(11) **EP 1 936 553 A1**
(43) Date of publication of application: **25.06.2008**
(21) Application number: 06127156.5
(22) Date of filing: 22.12.2006
(51) Int. Cl.: G06Q 10/00, G06F 3/048

(54) **Method for automatically extracting business management data from the history of documents and the association with their contents**

(71) Applicant: PRB S.r.l., 20135 Milano (IT)
(72) Inventor: Carbonera, Antonio, 27100 Pavia (IT); Forlani, Paolo, 20135 Milano (IT); Garavaglia, Roberto, 20010 Bernate Ticino (IT)
(74) Representative: Borsano, Corrado

(57) **Abstract**

The present invention provides for a method for automatically extracting business management data from the history of documents and the association with their contents; characterized by providing the following steps:
- dividing a computer screen into baskets including sets of objects relating to different advance phases of business items, or archives, or mail boxes, said objects can be moved by dragging their icon on the screen or opened;
- creating one or more configuration tables defining, for each basket, which data have to be extracted for every possible situation change or move from origin to destination baskets;
- creating one or more management data tables including said extracted data;
- using said one or more management data tables for linking with other programs and devices.

## Description

The present invention relates to a method for automatically extracting business management data from the history of documents and the association with their contents.

The information systems today used by small and big organizations enable the users to create, modify, move, send and receive any kind of documents. They also permit to every user to organize personal activities, to keep track of deadlines and to keep an address book with contact persons and organizations.

Another known function that is available in informatics is the Optical Character Recognition (normally called OCR), that extracts text and numbers (information data) from images of documents.

All activities such as, for instance, creation of documents, moving and recording of data, addition of due activities and confirmation of their execution, are performed by the user or the users involved in the process, by means of explicit actions, such as: the starting of an electronic mail program and the creation of a new message; the moving of a document from the folder of the "business files to be executed" to the folder of the "executed files" and so on.

There is a need in the organizations of any dimension to track and monitor the advance of activities and business files, in a more or less formal way, to reach the business aim in the fastest and most economic way. Business files and documents must be easily found even at some distance in time: for this reason they have to be stored in an efficient way, together with the data ("indexes") that identify them in an as accurate as possible way.

Present information systems allow all activities of recording, indexing and monitoring, but need a significant work to insert management data and this work is done mostly by hand.

The time expense for these activities brings often to reduce them to their absolute minimum and to perform them in an approximated way, with negative effects such as management errors and the impossibility to find documents after some time. The management then does not reach optimal levels of efficiency, speed and economy.

Therefore a problem arises in terms of difficult and time consuming users interfacing procedures for recording, indexing and monitoring the advance of activities.

It is not yet known a solution to the technical problem of automatically extracting business management data by the history of documents and the association with their contents and automatically creating corespondent tables of management data relating to activities of recording, indexing and monitoring, so as to considerably save computer time and resources, in terms of number of program instructions or routines to be performed, as well as for linking with other programs or devices.

Therefore the purpose of the present invention is to provide a method for automatically extracting business management data from the history of documents, and the association with their contents, able to solve the aforementioned problems.

It is a particular subject of the present invention a method for automatically extracting business management data from the history of documents and the association with their contents; characterized by providing the following steps:
- dividing a computer screen into baskets including sets of objects relating to different advance phases of business items, or archives, or mail boxes, said objects can be moved by dragging their icon on the screen or opened;
- creating one or more configuration tables defining, for each basket, which data have to be extracted for every possible situation change or move from origin to destination baskets;
- creating one or more management data tables including said extracted data;
- using said one or more management data tables for linking with other programs and devices.

These and further objects are achieved by means of a method for automatically extracting business management data from the history of documents, and the association with their contents, as described in the attached claims, which are considered an integral part of the present description.

The invention will become fully clear from the following detailed description, given by way of a mere exemplifying and non limiting example, to be read with reference to the attached drawing figures, wherein:
- Figure 1 shows an example of screen with a number of baskets including objects, according to the method subject of the invention;
- Figure 2 shows a schematic diagram with an overall view of the operation of the computer program which implements the method;
- figures 3.1 to 3.7 show flow-charts of parts of the computer program.

The basic idea of the present invention consists in exploiting the actions of the user, such as document move, receive, send and modify, to automatically extract data or indexes that, associated with the text present in documents or with the text obtained by OCR from the image of documents, form management data in suitable tables. These tables can also be used for the automatic control of the prosecution of the work to be done.

For instance, if a user opens a document that was received in a corporate mailbox, he becomes the user associated with the document. If a user moves a document from the folder "documents to be approved" to the folder "approved documents", two management data are automatically extracted: the name of the user that has approved the item, and the approval date and time.

If such data are associated with the receive date and time and with the name of the sender (automatically given by the system at the moment of the reception), and with several data obtained from the text contained in the document (i.e. invoice number, amount), it happens that the document, without any manual data entry, is associated with all management data (indexes) that permit to prosecute its way in automatic mode, eventually to archive it and to find it again easily.

The above described utilization of actions and contained data occurs in a completely automatic way, without any perception by the user, by means of computer programs based on a set of predetermined rules.

An extension of the method may also include the automatic start of one or more operations (i.e. opening of a program to add notes) after one of the above indicated user actions.

Another extension of the method consists in the automatic placement of documents in archives: the orderly analysis of the textual and graphic contents of documents, together with management data automatically extracted, allows to move automatically the documents to their right archives, from which, if necessary, they will be extracted by appropriate users to prosecute their advance.

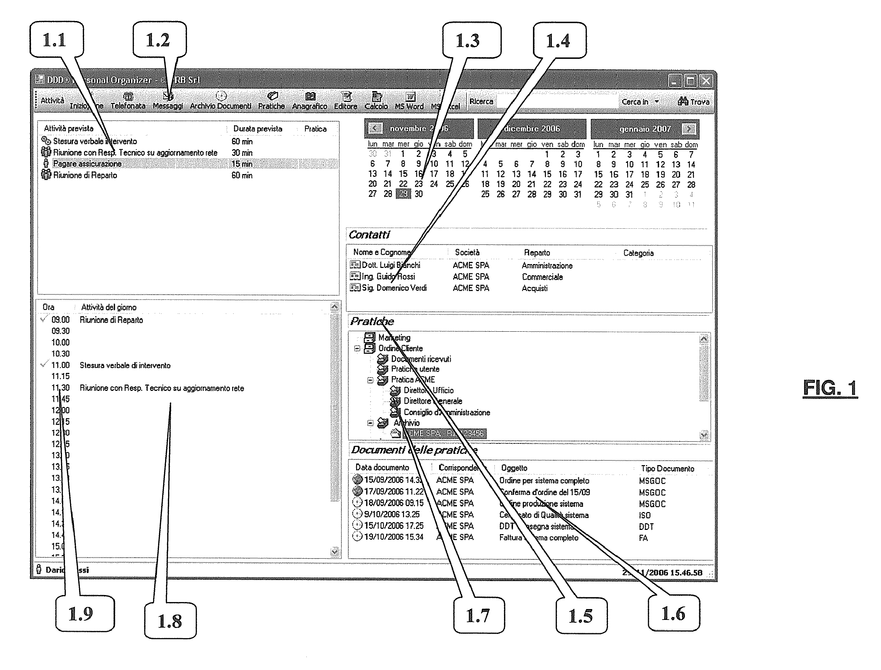

With reference to figure 1, the method subject of the invention provides for the appearance on a screen of a set of objects in baskets, for the different advance phases of business items, archives, mail boxes and so on. Documents appear in the baskets and can be moved by dragging their icon on the screen; they also can be opened by double clicking on them.

For example in fig. 1, the baskets show:
1.1 = Activities to be done
1.2 = Function buttons
1.3 = Calendar
1.4 = Contacts (Correspondents, Colleagues)
1.5 = Business Dossiers
1.6 = Documents in business dossiers
1.7 = Document Baskets
1.8 = Activities of the day
1.9 = Start time

A first step in the method of the invention is the creation of on one or more configuration tables that define, for each basket, which data the program has to extract for every possible situation change, for creating the management data tables.

Therefore, as a starting phase, an analysis is performed on the data and documents of an organization. For each type of document, all relevant index data are specified and also the action that makes these data available is detected; the result of this phase is a configuration table, in computer readable form, that completely specifies the operation of the program. Index data can be extracted:
- by the story of the document: for instance, if an operator moves a document, he becomes the user associated with it
- by data associated with the document: for instance, if an e-mail is received, the name of the sender is exactly known and can be used as an index
- by data contained in the document: for instance, in a received fax, the name of the recipient can be read by performing OCR (Optical character recognition) on a certain area of the document.

In the following an example of configuration table is given.

The configuration table has a number of columns equal to the possible "origin" state of documents and a number of rows equal to the possible "destination" state of each document, that can be automatic (i.e. the arrival of a document) or human (i.e. the opening of a document).

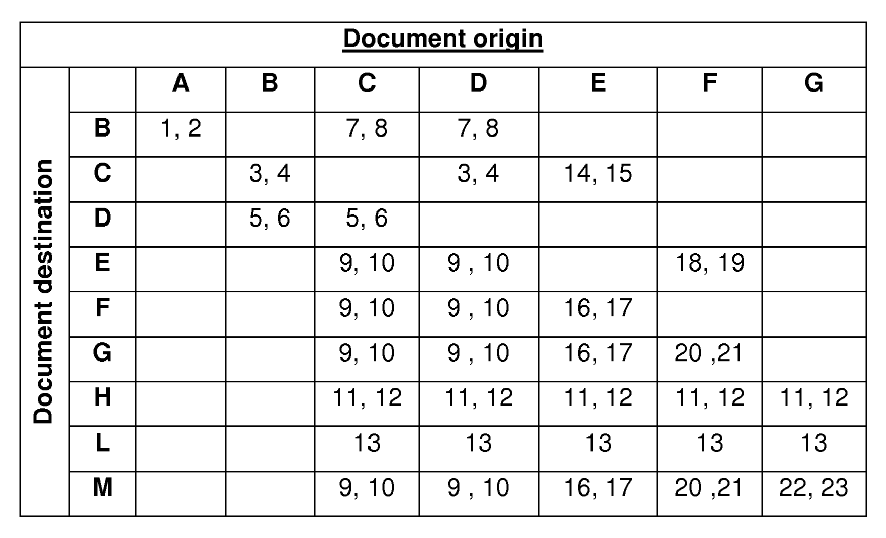

In the boxes of the configuration table the origin and the destination states are the following:
A = Receiving line (e-mail,fax) ; B = Incoming messages ; C = User Basket ; D = Business dossier ; E = Basket 1 (office manager) ; F = Basket 2 (general manager) ; G = Basket 3 (managing board) ; H = Outgoing messages ; L = Archive ; M = Approved dossiers.

In the boxes of the configuration table the corresponding data to be extracted and used are the following:
1 = Sender number or ID ; 2 = Date/Time of arrival ; 3 = Responsible user ; 4 = Date/time of user acceptance ; 5 = Dossier ID ; 6 = Dossier correspondent ; 7= Date / Time of user rejection ; 8 = User who rejected ; 9 = Date / Time of user approval ; 10 = Approving user ; 11 = Date / Time of send ; 12 = Destination number or ID ; 13 = Archival date / time ; 14 = Date / Time of manager rejection ; 15 = Manager who rejected ; 16 = Date / Time of manager approval ; 17 = Manager who approved ; 18 = Date / Time of general manager rejection ; 19 = General manager who rejected ; 20 = Date / Time of general manager approval ; 21 = General manager who approved ; 22 = Date / Time of managing board approval ; 23 = Managing board that approved.

For instance, if a new graphical document (fax) arrives in the incoming mailbox, it is scanned by OCR, the destination user is read and the fax number of the sender is extracted; these data are stored in the program database as indexes. When the document is opened by a user, his/her name is associated to the document and stored in the document index collection.

As another example, when a document reaches its final destination, it is archived permanently by an operator that takes it to the "archive" basket; at that time, the document has a lot of indexes associated with it: the correspondent, the dates/times of all its steps and the names of the operators that performed them, the main data in its text, the kind and number of business item: this is a very complete set of information that are used as indexes in the archival system and that can be used to find it easily.

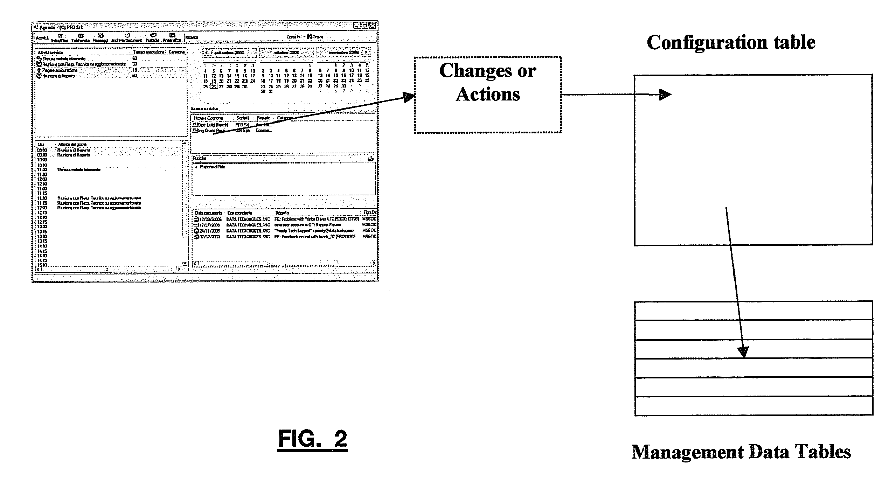

An overall view of the operation of the computer program which implements the method is shown in figure 2. Documents appear in the baskets on the screen and can be moved by dragging their icon on the screen. On the basis of the changes or actions made, according to the correspondences on the configuration table that define, for each basket, which data the program has to extract for every possible situation change, the management data tables are created.

The computer program implementing the method is linked with other programs and devices in the information system (i.e. to electronic mail or fax servers) by means of commonly used informatics links such as : API (Application Program Interfaces) or database connections or even by keypress and screen reading simulators.

For instance, if the method is used to store documents in an archival system, many detailed indexes are made available, such as dates, times, user and correspondent names, manager names and so on. The richness of these data greatly improves the possibility to easily find the document in the future. As another instance, if the method is used to send a document by e-mail, all sending details such as subject, correspondent name and address, references are already available and it is not necessary to type them again.

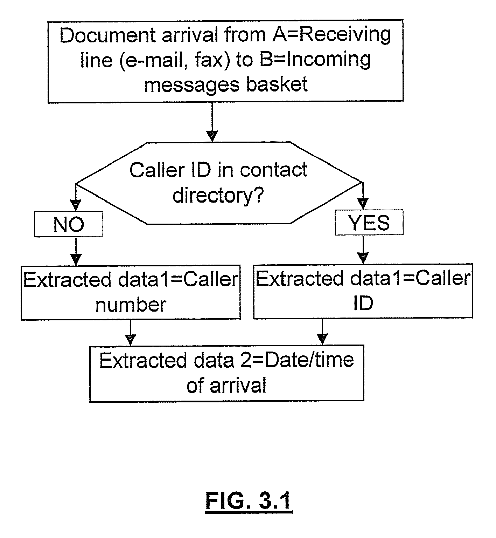

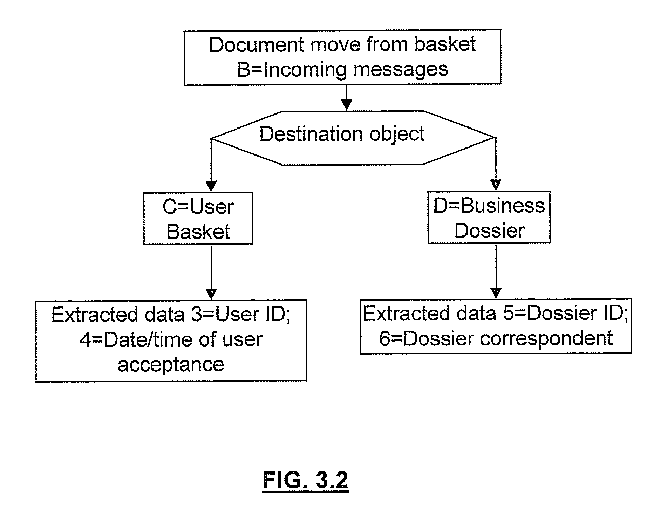

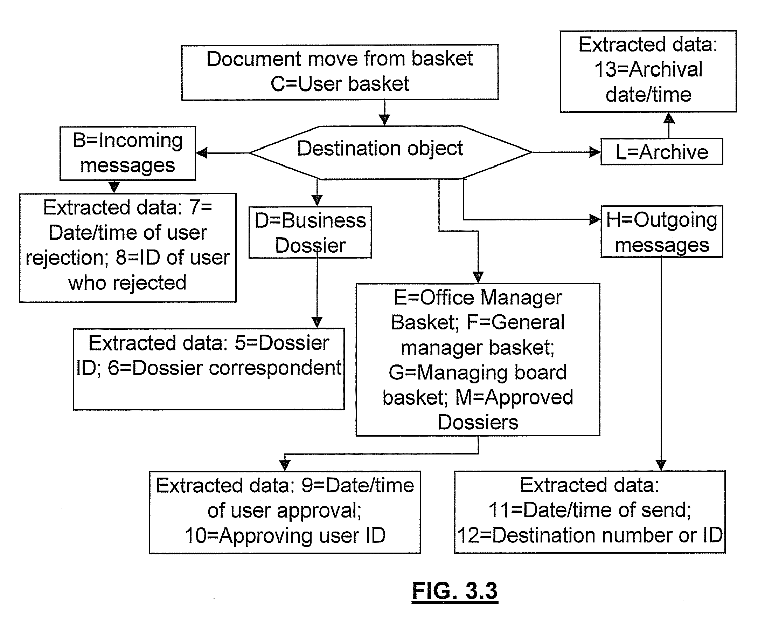

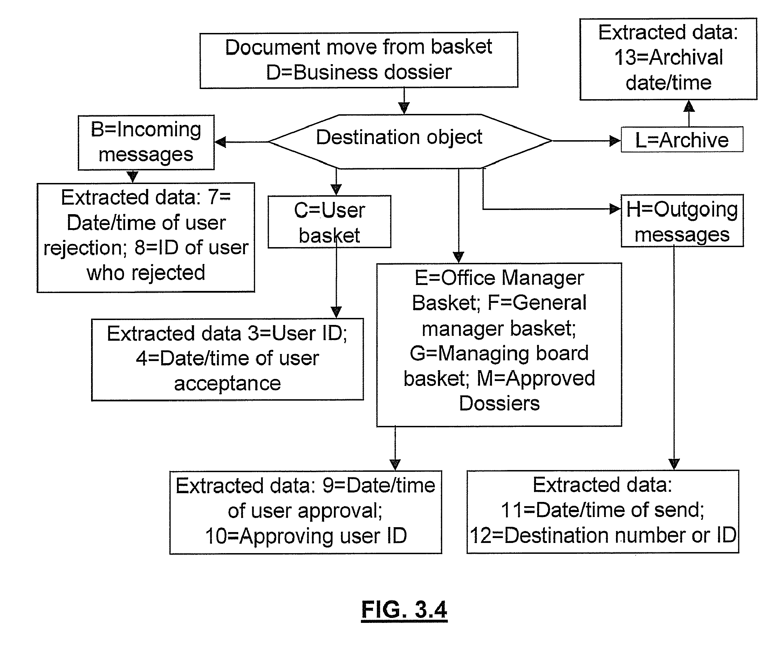

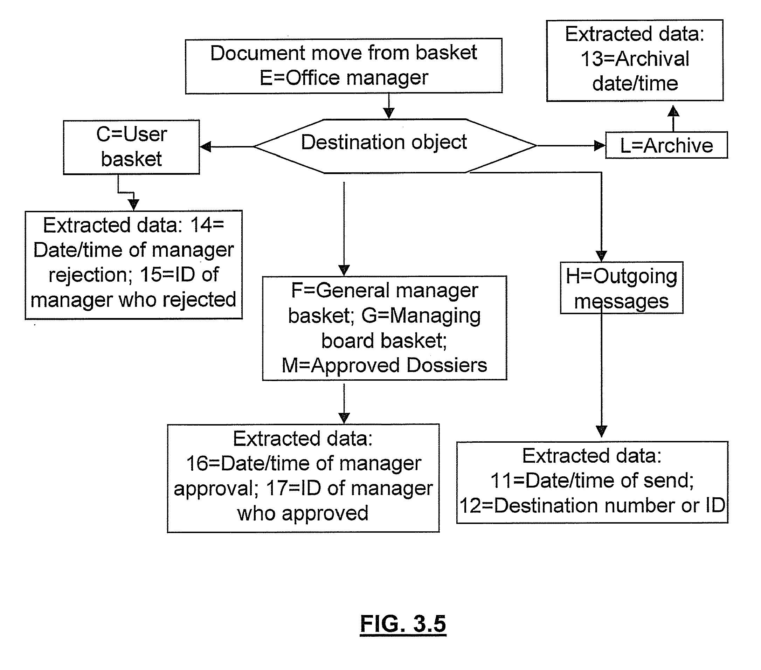

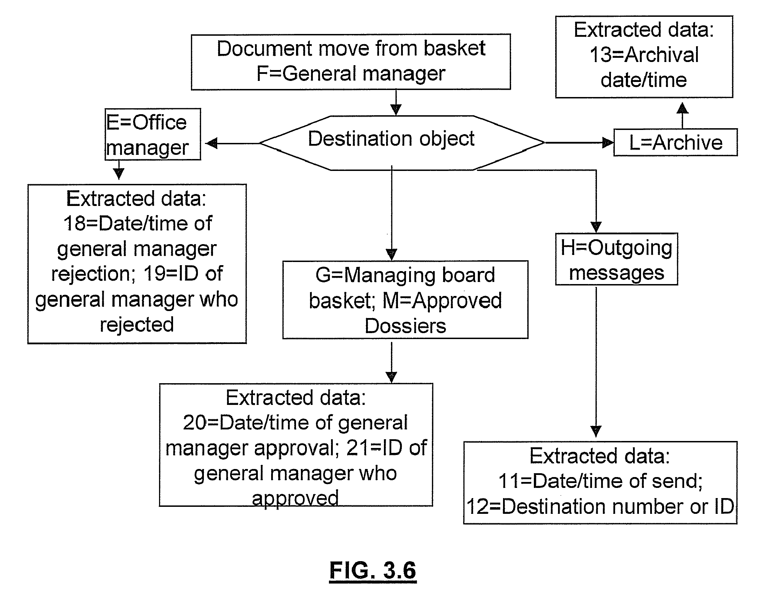

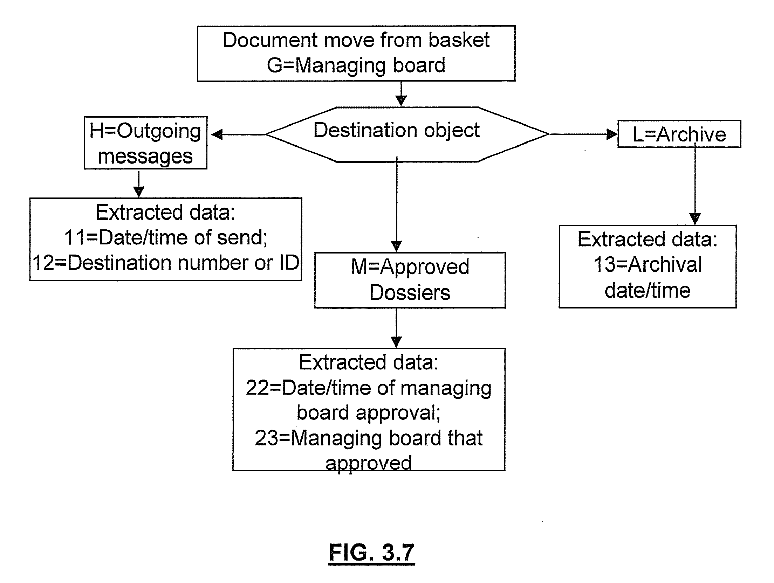

The figures 3.1 to 3.7 show examples of flow charts of the computer program implementing the method, relating to the extraction of data, where there are shown (with corresponding letters and numbers with respect to those used in the table shown above) the origin and the destination baskets, and the kind of data to be extracted for creating the Management Data Table.
The flow charts are self explanatory and are considered to be integral with this description, and therefore there is no need to describe them in details here.

As an example of a computer program implementation of the method subject of the invention, in the following a listing is given of a piece of code that, in a typical implementation of a Visual Basic program that carries out the method, performs a part of the program relating to the function of "Move document from a basket to another one"

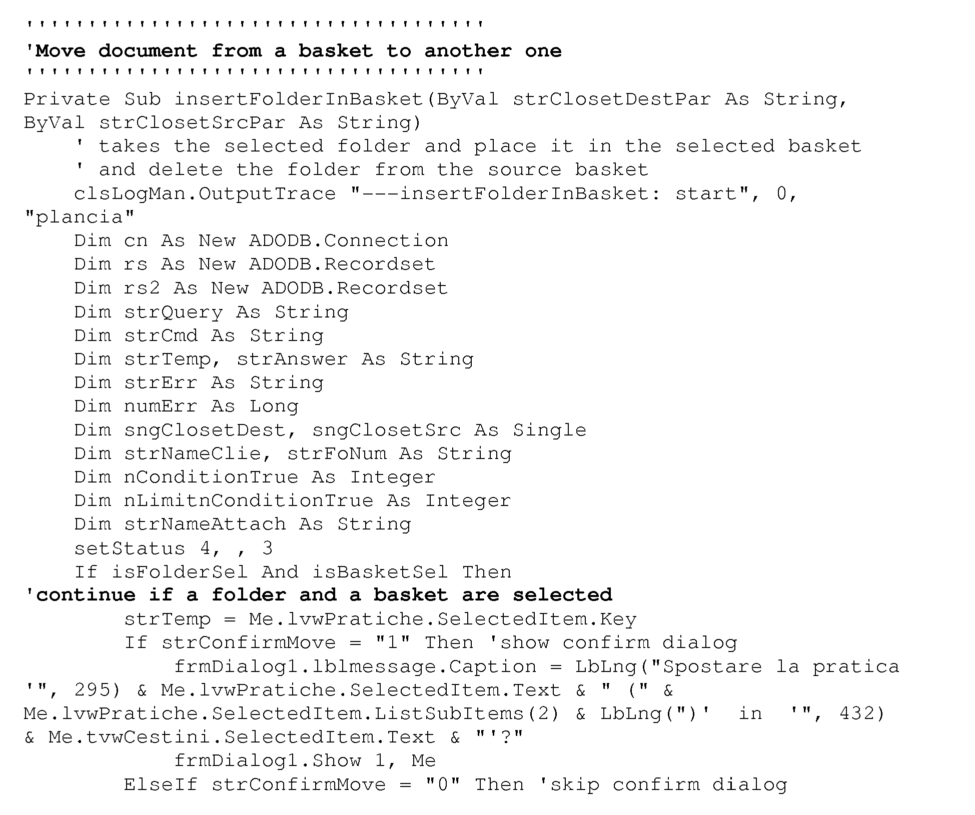

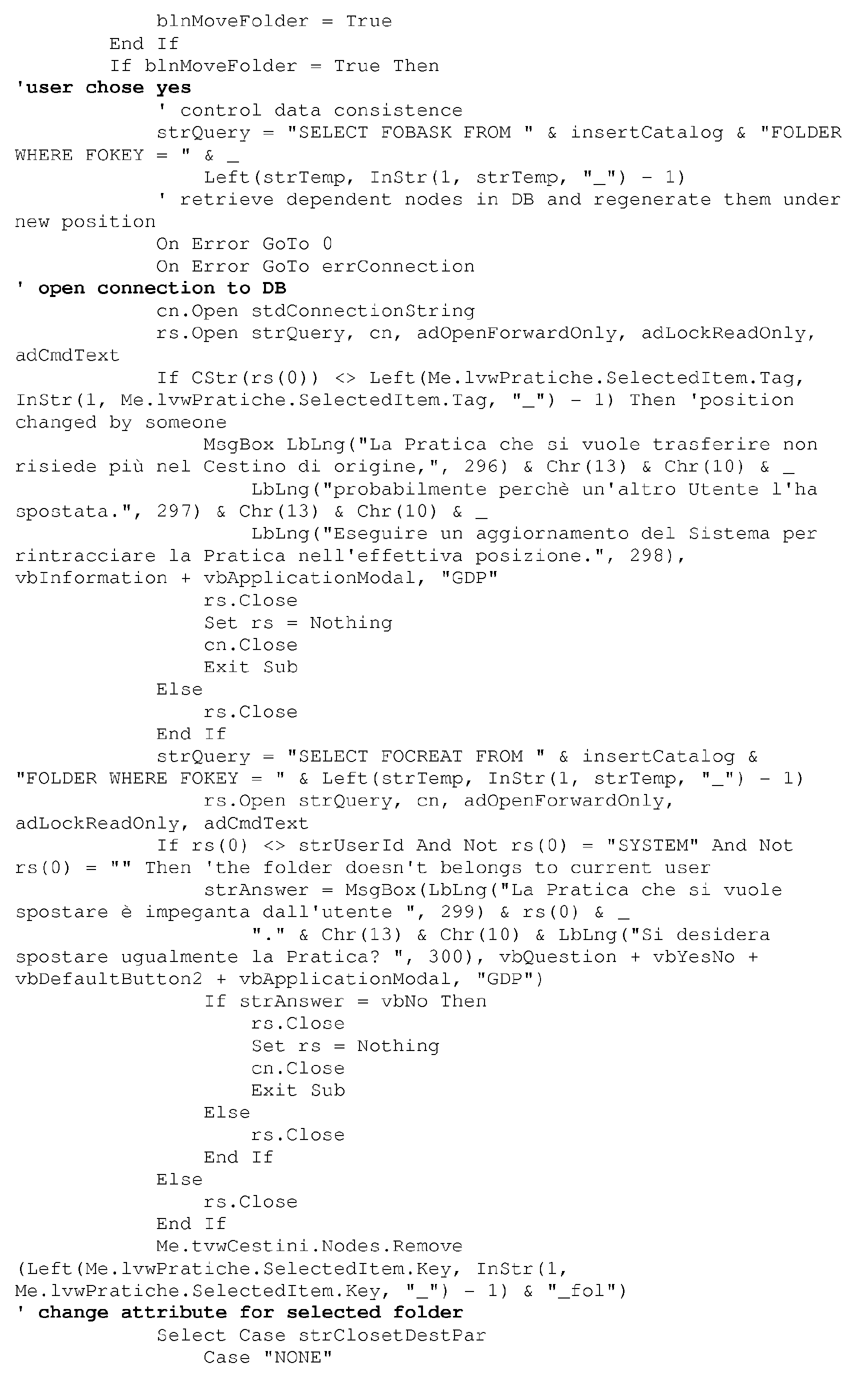

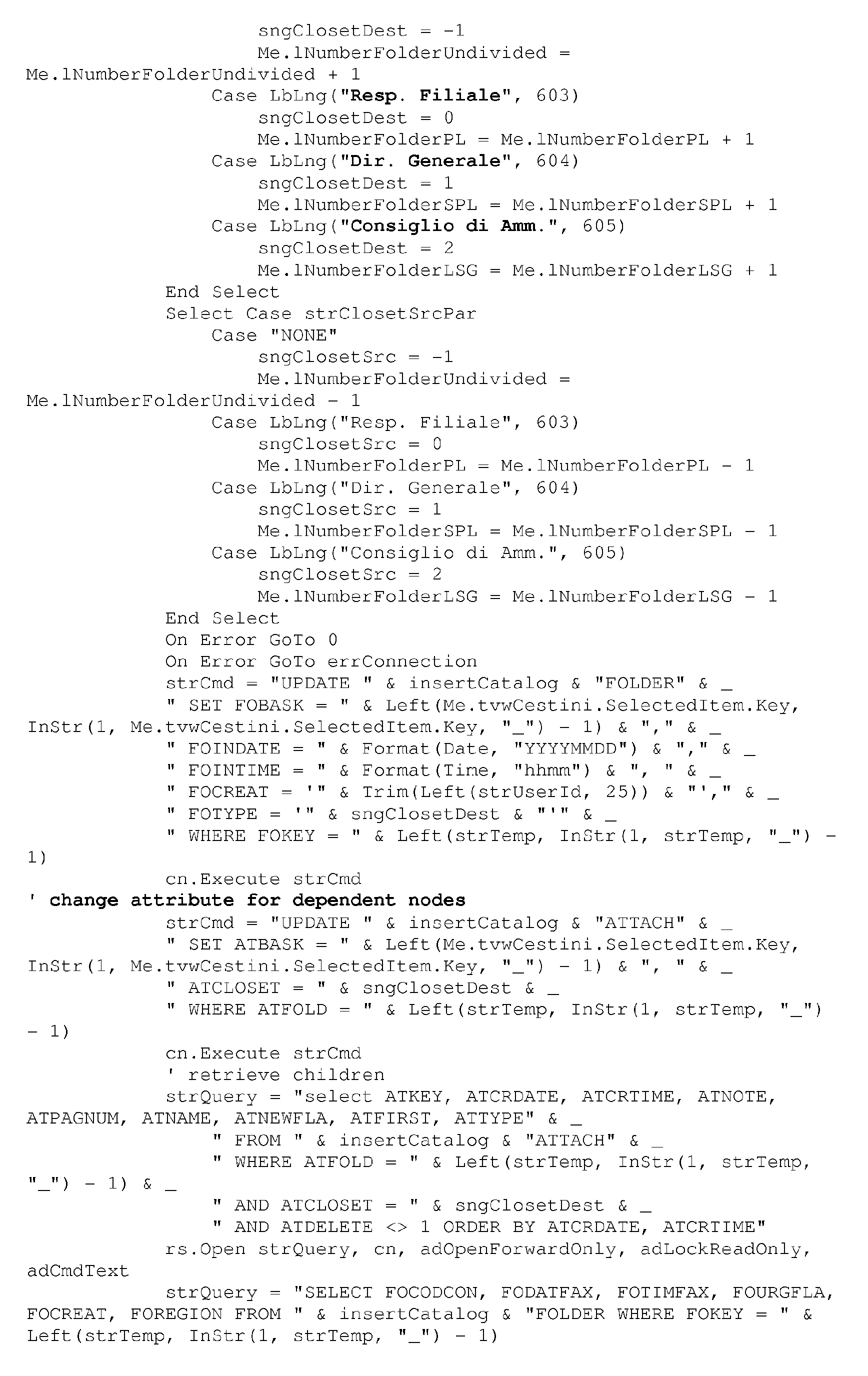

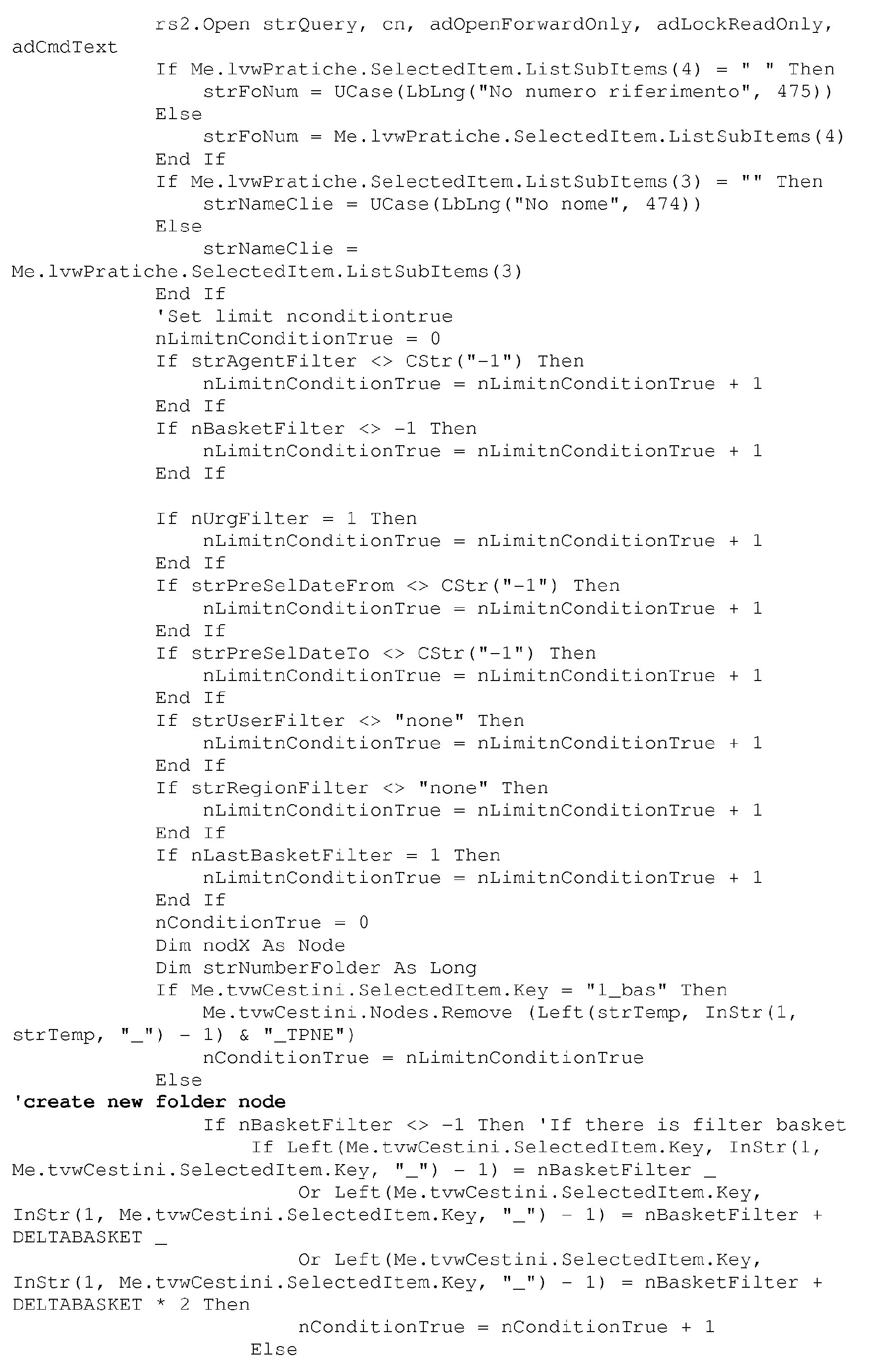

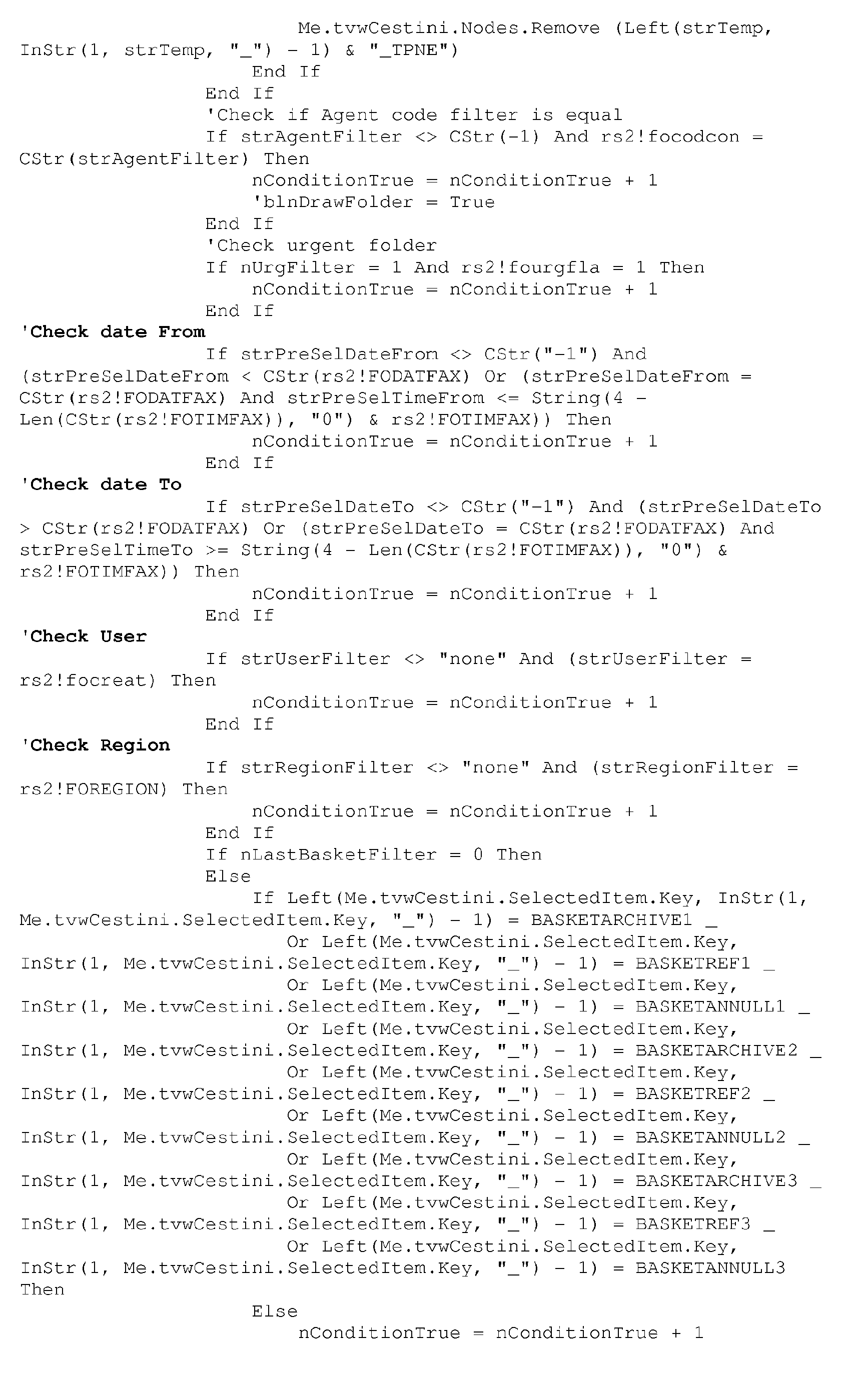

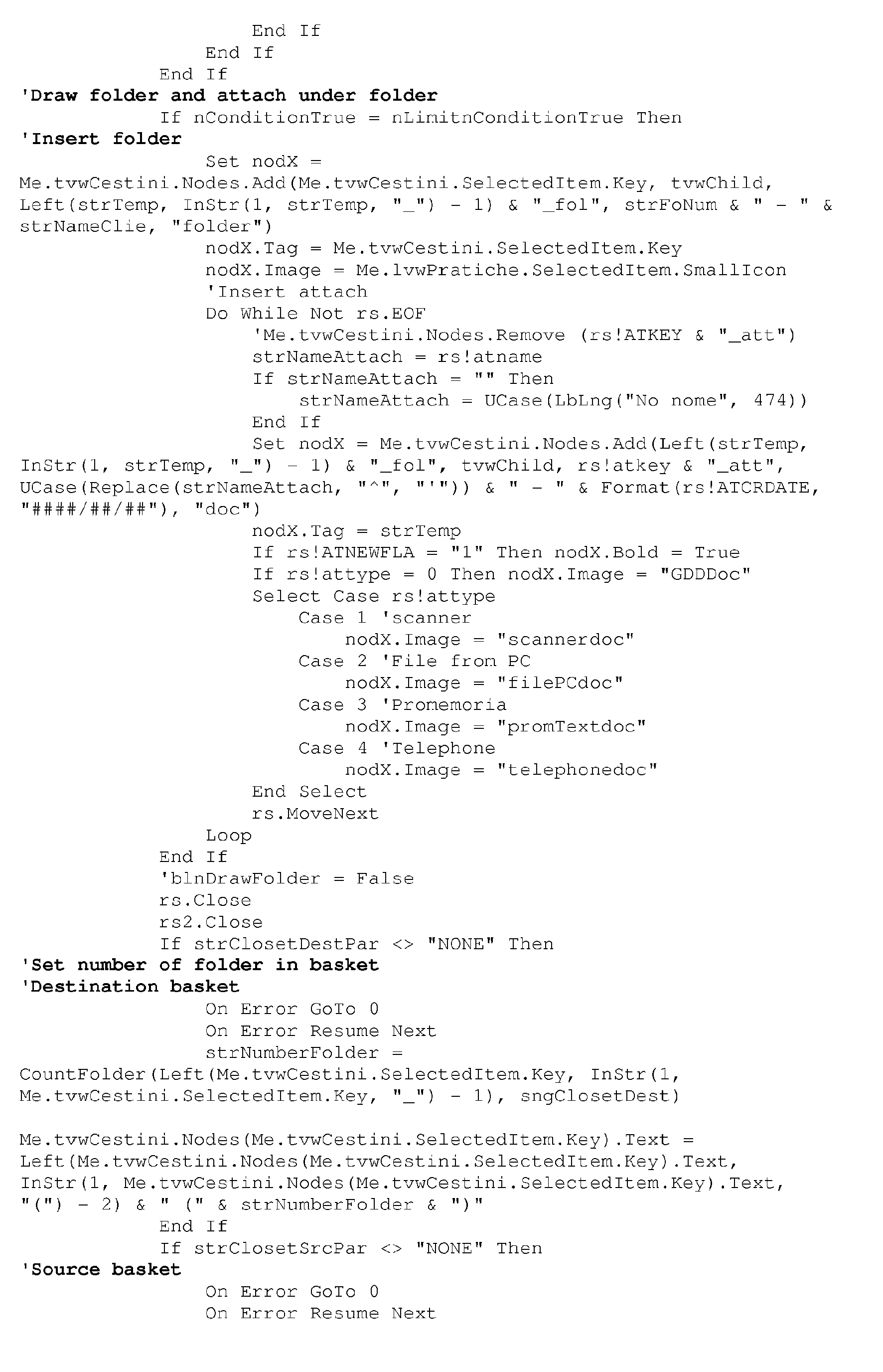

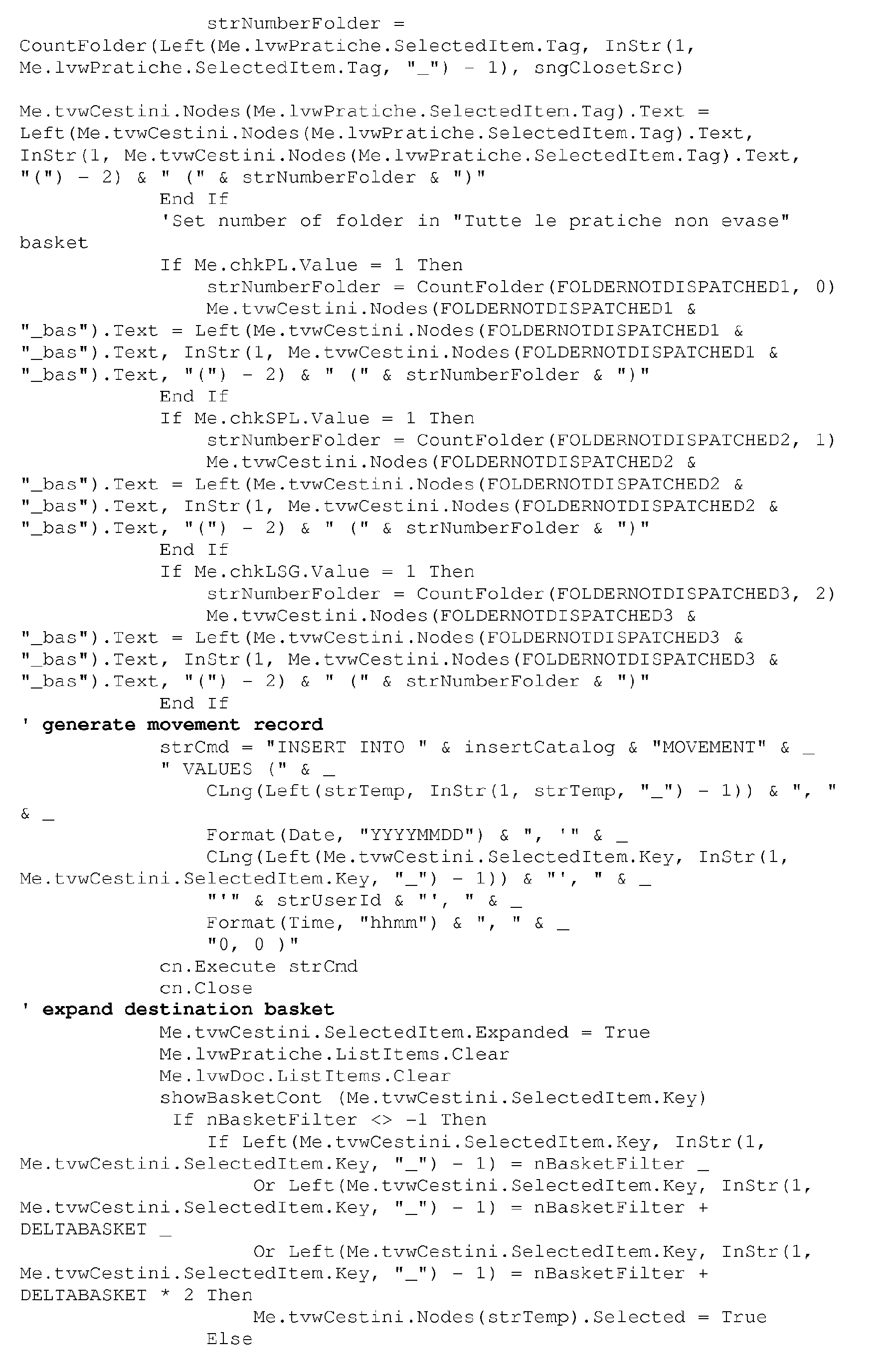

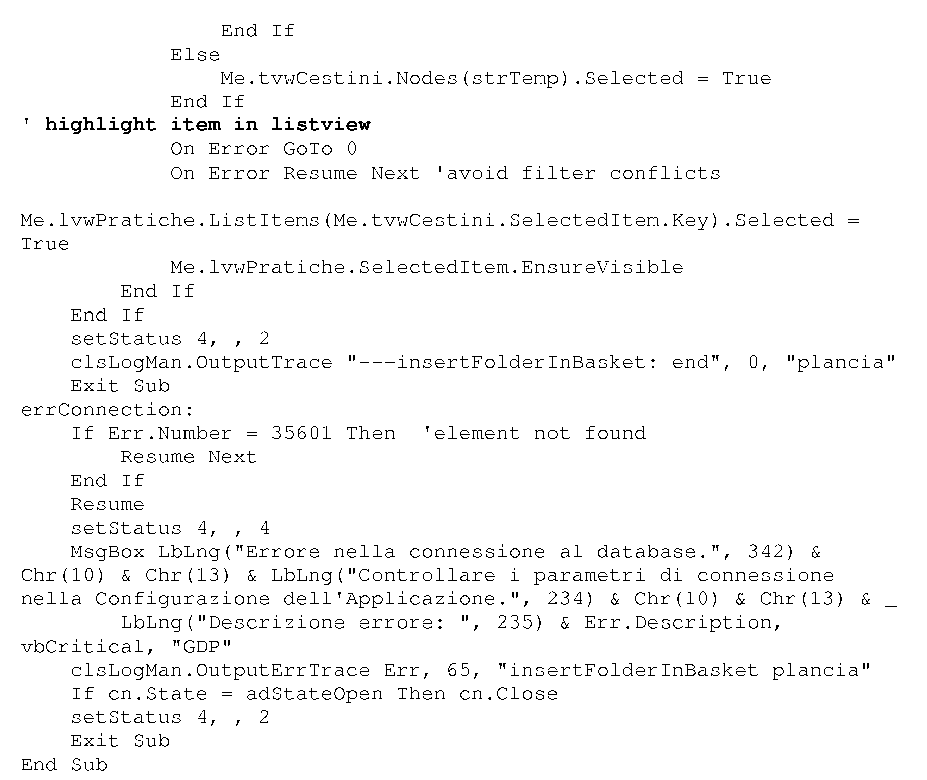

The present invention can be advantageously implemented through a program for computer comprising program coding means for the implementation of one or more steps of the method, when this program is running on a computer. Therefore, it is understood that the scope of protection is extended to such a program for computer and in addition to a computer readable means having a recorded message therein, said computer readable means comprising program coding means for the implementation of one or more steps of the method, when this program is run on a computer.

By means of the present invention, a number of advantages are achieved.

With an information system made according to the method of the present invention the quantity of management and index data to input manually is drastically reduced or cancelled, while business round time and possibility of errors are reduced to their minimum.

Further implementation details will not be described, as the man skilled in the art is able to carry out the invention starting from the teaching of the above description.

Although the invention has been described in detail for the purpose of illustration only, it is understood that such detail is solely for that purpose and that many variations, changes, additions and substitutions can be made therein by those of ordinary skill in the art without departing from the spirit and scope of the invention.

## Claims

1. Method in a computer system for automatically extracting business management data from the history of documents and the association with their contents; **characterized by** providing the following steps:
- dividing a computer screen into baskets including sets of objects relating to different advance phases of business items, or archives, or mail boxes, said objects can be moved by dragging their icon on the screen or opened;
- creating one or more configuration tables defining, for each basket, which data have to be extracted for every possible situation change or move from origin to destination baskets;
- creating one or more management data tables including said extracted data;
- using said one or more management data tables for linking with other programs and devices .

2. Method according to claim 1, **characterized in that** using said one or more management data tables for linking with other programs comprises the automatic start of one or more operations, or automatic opening of a program.

3. Method according to claim 1, **characterized in that** using said one or more management data tables for linking with other programs comprises automatic placement of documents in archives.

4. Method according to claims 2 or 3, **characterized in that** said other programs and devices comprise archival systems, communication programs and devices (to send/receive e-mail, fax and others), personal organizer devices (PDA) or palm computers.

5. Method according to claim 1, **characterized in that** said creating one or more configuration tables includes:
- performing analysis on the data and documents of an organization, for each type of document;
- specifying all relevant index data, and the actions that make these data available;
- creating said one or more configuration tables including boxes with correspondences between all the "origin" states of documents and all the destination" states of each document, in said boxes placing identifications of the corresponding data to be extracted and used.

6. Method according to claim 5, **characterized in that** said index data are extracted from: the story of the document; the data associated with the document; the data contained in the document.

7. Computer program comprising computer program code means adapted to perform all the steps of claims 1 to 6, when said program is run on a computer.

8. A computer readable medium having a program recorded thereon, said computer readable medium comprising computer program code means adapted to perform all the steps of claims 1 to 6, when said program is run on a computer.
